# EUROPEAN PATENT APPLICATION

(11) **EP 1 790 998 A2**
(43) Date of publication of application: **30.05.2007**
(21) Application number: 06123521.4
(22) Date of filing: 06.11.2006
(51) Int. Cl.: G01T 1/24

(54) **X-Ray detector and method**

(30) Priority: 23.11.2005 GB 0523838
(71) Applicant: Oxford Instruments Analytical Limited, Oxon, OX29 4TL (GB)
(72) Inventor: Bhadare, Santokh Singh, Greenford, Middlesex UB6 8RZ (GB)
(74) Representative: Lord, Michael

(57) **Abstract**

We provide an x-ray detector having a housing with one or more internal surfaces defining an internal volume. The housing is adapted in use to contain a vacuum within the internal volume. An x-ray sensor is located within the internal volume of the housing. A window, located within the housing, is adapted to permit the passage through the window of x-rays to be detected from the external environment to the sensor. A getter material is applied as a coating to the one or more internal surfaces, for absorbing gaseous species present within the vacuum and for substantially preventing outgassing from the parts of the walls coated by the getter material.

## Description

### Field of the invention

The present invention relates to an x-ray detector for use for example in the field of x-ray analysis of materials. A method of making such a detector is also disclosed.

### Background to the Invention

Sealed vacuum enclosures are desirable in x-ray detectors to keep the x-ray sensor surfaces clean, to reduce the thermal load on a cooled x-ray sensor and to minimise x-ray absorption along the x-ray path length.

Vacuum levels of less than 1x10⁻³mbar are used to minimise the above effects on the x-ray sensor. It is a known fact that a sealed volume under vacuum will gradually loose the vacuum due to outgassing of internal surfaces, leakage from outside the evacuated envelope and permeation of gases through the solid envelope walls. This degeneration in the vacuum eventually leads to detector failure or at least some loss in performance.

To maintain a vacuum in the x-ray detector envelope some means of active pumping is needed. This can be achieved with small vacuum pumps like ion getter pumps although these are disadvantageous because they are costly, bulky, require a power supply and need to be kept on all the time.

The use of molecular-adsorbent porous bodies as getters is known. Typically these adsorbent materials need to cooled to cryogenic temperatures to have high absorption efficiency for gases. Careful selection of the material type and quantity is needed to ensure the getter can function for the life-time of the product. An example is described in US patent No. 4474036 which shows the use of a zeolite material cooled by a cold finger.

Another class of getter materials is non-evaporable chemically-active getters (NEGs). An example of the use of such a material is described in U.S. patent number 3851173. Such chemical getters are activated by being taken to high temperature (typically up to 900 degrees Celsius) during or after evacuating and sealing the dewar envelope of the detector. This is normally achieved with an electrical heating element embedded in the getter material. A vacuum feedthrough is required to connect the heater to an external power supply. Crucially, to protect heat sensitive detector parts, radiation shields need to be employed between the very hot getter and the heat sensitive part during the activation process. Furthermore, in order to "getter" sufficiency large quantities of gas, such NEG getters need to have a large surface area and can be bulky. This can present a dimensional size problem and hence lead to an increased size for the detector envelope and even the adoption of an unconventional detector envelope outline. NEG getters have also been used in other fields, such as infra-red detection as described in US patent 5177364, and particle accelerators as in US patent 6468043.

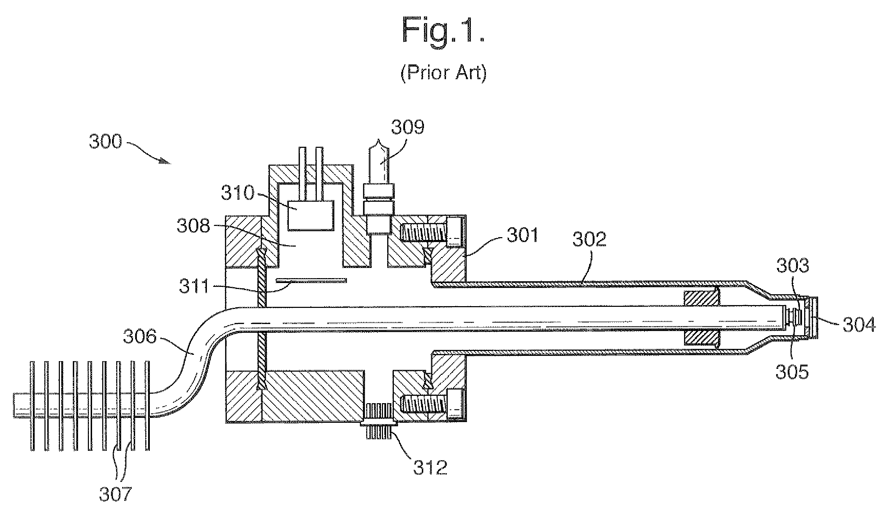

An example prior art arrangement 300 is shown in figure 1. The x-ray detector has a main a body 301. A long narrow tube 302 projects from the body 301, this arrangement being governed by the design of modern apparatus with which the detector is used such as a scanning electron microscope (SEM), transmission electron microscope (TEM), x-ray fluorescence (XRF) apparatus or other defect review apparatus (such as is used in a semiconductor plant). Space constraints in these machines (that is, small vacuum chambers) necessitate the use of narrow tubes to position the x-ray sensor as close as possible to the source of x-ray generation. In Figure 1, the x-ray sensor 303 is located at the distal end of the tube 302 from the body 301 adjacent a window 304 through which x-rays pass from the vacuum chamber of the apparatus. The x-ray sensor 303 is cooled by a thermoelectric cooler (TEC) 305 which in turn is thermally coupled to a heatpipe 306 which passes along the tube 302 and out of the rear of the body 301 where it is coupled to a heat sink 307. The TEC 305, heatpipe 306 and heatsink 307 are operative to maintain the x-ray sensor 303 at an operational temperature of about -35 Celsius.

The interior of the body 301 and tube 302 are evacuated as is indicated at 308, this being achieved using a "pinch off" tube 309 which communicates with the interior of the body 301.

in order to maintain the operational vacuum within the interior of the body 301 and tube 302 a block of NEG getter material 310 is positioned within the interior of the body 301. Unfortunately physical size constraints limit the size of the getter 310 to be placed in the "body" part of the detector and hence this ultimately limits the pumping capacity at the x-ray sensor 303 due to the loss in pumping conductance. The getter material chemically reacts and forms a solid compound with all gasses except hydrogen (which is physically absorbed) and inert gases (which are not absorbed at all). The material must be first "activated" by heat. The temperature required is 600 degrees Celsius in this example. Following activation the getter will function for an extended period of months (or even years) before requiring activating once more. After a number of activation cycles no further unreacted material remains and the getter no longer functions. Normally by such a time, the detector has reached the end of its service life.

Because the getter requires reactivation and because the interior of gettered detectors requires a vacuum environment it is necessary to perform the activation of the getter material *in situ.* However, this is problematical because one or more of the x-ray sensor 303, TEC 305 and window 304 are incapable of withstanding such high temperatures. For example, if a polymer window is chosen then the temperature of the window cannot be safely elevated above 80 degrees Celsius. This problem is addressed by locating the getter 310 away from the sensor 303 in the body 301 (which is required in any case to provide sufficient volume) and in addition a heat shield 311 is provided to shield the heat pipe 306 and sensor 303 from the heat radiation during activation. The getter material 310 is provided with embedded wiring connected to an external power supply via an electrical feedthrough 312. in order to "activate" the getter (also known as "firing") the power supply is connected and electrical current used to heat the wires and therefore the getter 310.

The use of getters therefore causes a number of problems. They must be thermally separated from the x-ray sensors and their physical size is limited by the internal volume available behind the heat shield. A further problem is that the volume within which the sensor and getter are contained is of considerable size and is accordingly bounded by walls of considerable surface area. Such walls are prone to outgassing which reduces the vacuum quality and the operational life of the apparatus.

### Summary of the Invention

in accordance with a first aspect of the invention we provide an x-ray detector comprising:-
a housing having one or more internal surfaces defining an internal volume, the housing being adapted in use to contain a vacuum within the internal volume;
an x-ray sensor located within the internal volume of the housing;
a window located within the housing and adapted to permit the passage through the window of x-rays to be detected from the external environment to the sensor; and
a getter material, applied as a coating to the one or more internal surfaces, for absorbing gaseous species present within the vacuum and for substantially preventing outgassing from the parts of the walls coated by the getter material.

In this invention we have realised that an improved x-ray detector (such as an energy dispersive detector) can be produced by utilising a new type of getter material, namely one being capable of being applied as a coating. This coating may take the form of a film or layer, The application of these materials as a coating provides a great advantage in that the presence of the material coating substantial prevents any outgassing from the part of the internal wall(s) to which it is applied. In additional the use of a coating increases the available volume for placing the getter material and provides an advantageous large absorption area. The reduction in outgassing, using the getter material of the present invention, now allows compact detectors to be produced which have an internal volume containing a vacuum, rather than merely a low pressure gas environment (such as 100 mbar).

The getter materials of the invention are preferably alloys having compositions that include Titanium and Zirconium, with some also including Vanadium. Preferably the getter material is a non-evaporable chemically-active getter (NEG) material.

A second advantage of the getter materials according to the invention, is that they typically have a low firing or activation temperature, such a temperature being less than about 200 Celsius. A low activation temperature provides further advantages in that more of the volume within the body of the detector can be used, because the thermal barrier between the getter and the sensor is not required to be so large. Indeed, if the sensor and window are adapted for high temperature use (such as using a beryllium window for example) then a thermal barrier is no longer required at all. This is particularly the case if a getter with a minimised activation temperature is used.

The terms "activation" or "firing" used herein are described in conjunction with a specific temperature. Unsurprisingly such getters do not exhibit a binary behaviour as they are heated through such temperatures and therefore partial activation can occur at lower temperatures, particularly if long heat treatment times are used. The activation/firing temperatures described herein are temperatures which can cause activation of the getter material to an extent which is of practical benefit for use in a detector and which can be achieved by an activation heat treatment at that temperature having a duration of about 24 hours, although preferably less.

By using high temperature (greater than, say, 180 degrees Celsius) tolerant components such as wires, thermoelectric cooler, x-ray sensor and FET, the need for a radiation shield is eliminated. Preferably all components within the housing are capable of being heat treated at the activation temperature in question.

Each of the above features individually and in combination lends the design of the x-ray detector to be compact, for example in the form of a narrow tube. A further advantage is that the detector-sample distance can be reduced which in turn provides a large x-ray collection solid angle for the detector.

In some cases it may not be desirable to have all components within the detector being adapted to tolerate the activation temperature. In this case, for example where more sensitive electronics or a polymer window is used, the detector can be fitted with a localised thermal barrier, positioned between at least the getter and the x-ray sensor. This barrier might take the form of a radiation shield, the replacement of part of the detector housing with a thermally insulating material or the provision of a "thin" section within the housing to limit heat transfer across it.

Typically the sensor is cooled when in use and a suitable cooling device, such as a thermoelectric cooling device (TEC) is preferably provided for this purpose. This is preferably thermally coupled to a heat sink and a heat pipe may be used for this purpose.

The detector as a whole may take a number of forms, although it may be arranged such that at least one part is provided as an elongate tube. This allows the sensor to be placed as close as possible to the x-ray emitter within the apparatus with which the sensor is used, such as an SEM. The housing may comprise one elongate tube fitted coaxially within another and the volume between the tubes then defines the internal volume. In order to use the space within the body efficiently, preferably the getter material is located as a layer on the inner surface of the outer tube and/or the outer surface of the inner tube. This also aids in the reduction of outgassing as mentioned above.

Whilst the environment in the internal volume is a "vacuum", preferably it is a vacuum environment having a pressure of less than 1x10⁻³mbar. This vacuum level is maintained by the operation of the getter for a period of a number of months. As in prior art getters, the low activation temperature getter used with the present invention can advantageously be reactivated, thereby extending the life of the detector to a number of years.

Because the getter material is versatile and can be applied as a layer for example, this allows new designs of detectors. In some cases, for example where compactness in all dimensions is desirable, the detector can be provided as an evacuated and sealed detector can. Here the getter material may be provided at least on part of the internal surfaces of the housing adjacent the sensor. Preferably the majority of the housing internal surfaces bordering the internal volume may be provided with the getter material, since this reduces outgassing and increases the surface area of the getter, with a corresponding improved performance of the detector.

In accordance with a second aspect of the present invention we provide a method of forming an x-ray detector according to the first aspect. The method comprises the steps of:-
a) positioning the sensor and window within the internal volume of the housing:
b) evacuating the internal volume;
c) heating the getter material to its activation temperature; and
d) sealing the internal volume,

The heating of step (c) can be applied in a number of ways. For example, it may be applied using heating wires embedded in the getter material. However, a beneficial alternative available with low temperature getters is that the getter material may be heated to its activation temperature by applying heat to part of the housing in good thermal contact with the getter material. If the sensor is at risk during the heating step (c) then the method preferably further comprises cooling the sensor during step (c). This may be achieved by applying a heat sink to the housing adjacent the sensor, for example using a heat pipe.

Typically, prior to step (a), the getter material is deposited on one or more inner surfaces of the housing. This may be achieved using sputtering (magnetron configuration). Following this deposition, the window is preferably sealed in the housing. In order to ensure good performance, step (b) can be continued for a predetermined period or until a predetermined level of outgassing is achieved. Steps (b) and (c) are typically performed simultaneously.

The novel detectors according to the present invention as mentioned above represent a significant leap forward in the development of x-ray detectors for many applications such as microanalysis and x-ray fluorescence.

### Brief Description of the Drawings

Some examples of detectors and an associated method according to the invention will now be described with reference to the accompanying drawings, in which:-
Figure 1 shows a prior art detector;
Figure 2 shows a first example detector according to the invention, partly in section;
Figure 3 shows a second example detector according to the invention, partly in section; and
Figure 4 is an example method of fabricating the example detectors.

### Description of Examples

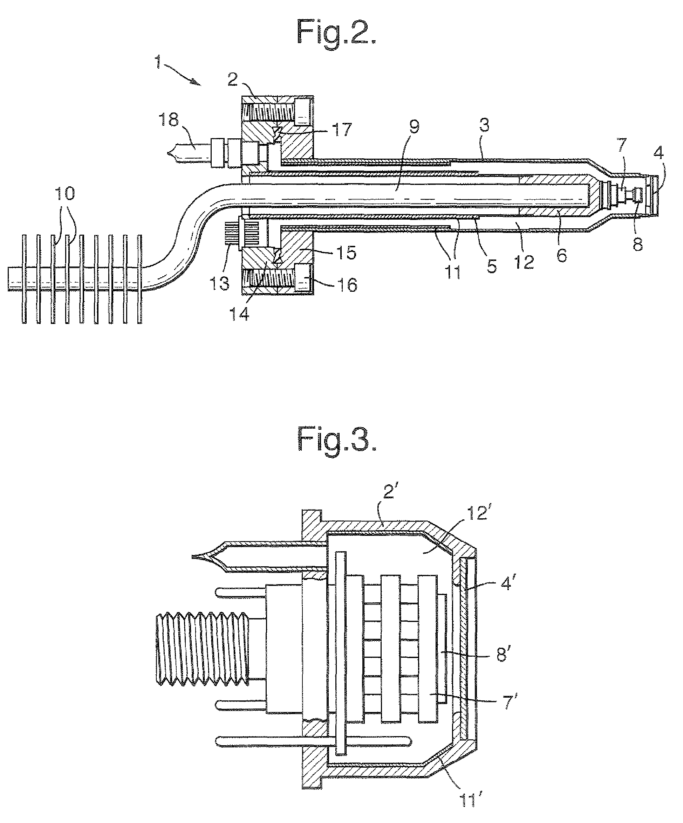

A first example of an x-ray detector 1 according to the invention is shown in Figure 2, which is a view partly in section. The detector 1 has a body 2 to which is coupled an elongate cylindrical outer tube 3. At one end of the tube 3, distal from the body 2, an x-rey window 4 is provided, this window being capable of withstanding a pressure differentia! across its surface, for example an external pressure of about 1 bar on one side and less than 1x10⁻³mbar on the other. The window is substantially transparent to x-rays. Within the elongate tube 3 a second, inner tube 5 is located, this being of reduced diameter (defining a space there between) and located coaxially with respect to the outer tube. The inner tube 5 terminates within the outer tube and is terminated by an end piece 6 which seals the inner environment within the outer tube (that is, the space between the outer and inner tubes), from the inner environment within the inner tube 5. Each of the tubes 3,5 may be fabricated from a suitable material (such as stainless steel, aluminium, and so on).

A TEC 7 is fitted to the end of the end piece 6, the end piece being a good thermal conductor such as copper and in turn, an x-ray sensor 8 is fitted to the TEC 7. Various types of x-ray sensor may be used, an example being a drift sensor. The sensor 8 is located very close to the inner side of the window 4.

Within the inner tube 5 a heat pipe 9 is located, this fitting into the end piece 6 at one end and passing along the inner tube 5 and out of the rear of the body 2 through which the tube 5 passes. External to the body, the heat pipe is coupled to a heat sink 10.

The space between the inner 5 and outer 3 tubes is evacuated when in use, to a pressure of less than about 1x10⁻³mbar, this forming a vacuum envelope.

An NEG getter material layer 11 is deposited on the outer surface of the inner tube 5 and also on the inner surface of the outer tube 3 as a coating. These surfaces border the volume between the tubes. This volume is shown at 12 which is therefore a vacuum environment which is also experienced by the TEC 7, x-ray sensor 8 and x-ray window 4. The use of the layer 11 on inner 5 and outer 3 tube surfaces provides a large surface area giving a good pumping performance and also reducing the amount of exposed surface capable of outgassing. Alternatively one of these surfaces could be used. The NEG getter material used in this example is a Ti-Zr-V alloy.

The surface area and thickness of the getter 11 required can be calculated (or estimated from experiment) from the amount of outgassing and life-time of the vacuum required. Various getter material may be used. An example of a low firing temperature getter material is the commercially available under the brand name "IntegraTorr" from SAES Getters Group.

In this example the getter film is spaced some way from the x-ray window 4 and the x-ray sensor element 8. This protects the heat sensitive parts from damage during the getter activation. If increased thermal protection is needed, thermal insulators (such as thinner metal tube thickness, ceramic or glass lengths) may be introduced in the thermal path between the heat sensitive components and the getter 11.

The getter material 11 may be provided with embedded wires and the electrical feedthrough for these is positioned within the body 2 at 13 (shown in Figure 2). This also carries signals from the x-ray sensor 8. In use, the embedded wires act as heaters for activating the getter. As an alternative in this case, the getter can be activated by using an external heater jacket (for the outer tube 3) and a rod heater (positioned in the inner tube 5). The body 2 is formed from two separable parts 14,15 held together by bolts 16 and sealed by an annealed copper seal 17. The internal volume is evacuated prior to use through a pinch off tube 18 which couples to the body 2.

A second example of the invention is shown in Figure 3 in which the analogous components of the body 2 and elongate tube 3 of Figure 2, are replaced by a can body 2'. This has an oblate form and is circular in cross section. In this case the detector is much more compact than in the first example. This has a very small volume (20 mm long by 15mm diameter).

The design is simpler with respect to the first example in that there is no inner tube arrangement and therefore the internal vacuum space 12' in this case is all of the internal volume which is not occupied by other components. The TEC 7' is thermally coupled to the rear of the can body 2' which in turn is coupled to a heat sink (not shown). As in the previous example, an x-ray sensor 8' is mounted to the TEC 7' adjacent an x-ray window 4' in the front of the can body 2'.

In this case the internal components of the can body 2' (such as Beryllium window, TEC device and wires and x-ray sensor) are designed to withstand temperatures of up to 200 degrees Celsius. This means that the getter need not be spaced significantly from the sensor 8', TEC 7' or window 4'. The getter 11' is located on most of the inner peripheral walls of the can body 2' other than the rear wall through which the heat is extracted from the TEC 7'.

The can arrangement of the second example is extremely advantageous in that the entire can may be simply placed within an oven at the activation (firing) temperature and heat treated to activate the getter 11'. Such a heat treatment may involve heating the entire can detector to 200 degrees Celsius for up to 24 hours.

To activate the getter, the vacuum space is evacuated through a pinch off tube 18' in the rear of the can body 2'. The vacuum enclosure is pumped through this pinch-off tube whilst, at the same time, the whole detector is raised to the getter firing temperature of, in this case, 180 Celsius. This temperature is maintained, for example for 12 or 16 hours, during which time the walls of the can body degas and the getter becomes activated. This process can be performed in a vacuum oven with an internal "crimp-off" tool, although a simpler approach is to use a "heated block" into which the can is inserted and a vacuum tube is attached to each can.

In either of the abovementioned examples the x-ray window may be cooled during the activation process of the getter 11,11', by mounting a heat sinking device such as a chilled water jacket, around the window. Furthermore, the heat pipe of the first example may be used to keep the x-ray sensor elements cool during the activation of the getter.

For the first example, the getter activation is performed after sealing the inner and outer tube flanges, The annealed copper seal or gasket 17 is used to limit the permeation of gases into the vacuum chamber.

In each case prior to getter activation, the chamber is pumped for a time through the pinch-off tube. Once the desired outgassing rates are achieved, the getter 11,11' can be activated by heating the getter through the tube walls or using an embedded heater, depending on the arrangement. External heating can be localised and temperature controlled, using a heating tape or clamps or infrared heaters around the portions of the body/tubes.

Over time the vacuum will degrade in the vacuum space 12,12' due to outgassing, leakage and permeation of gases. If desired the getter may be reactivated by heating by the above mentioned methods. The reactivation can be repeated many times until the body of the getter is saturated, at which point no more pumping of gases will take place. The reactivation may be performed over the operational life-time of the device in the field.

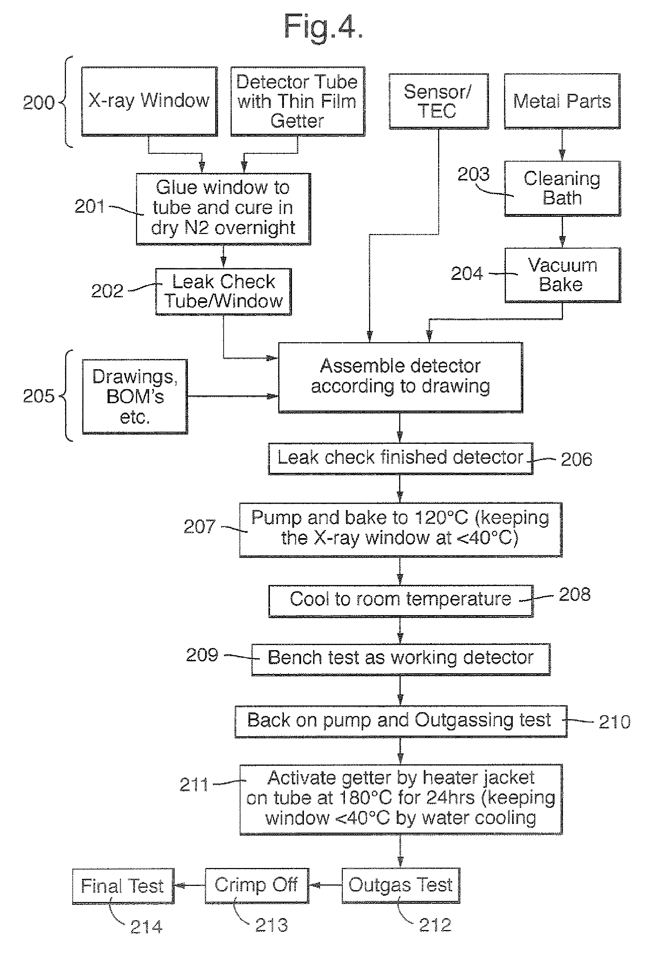

A flow diagram detailing how the detectors of the examples can be fabricated is shown in Figure 4. At step 200 an x-ray window, a preassembled sensor/TEC assembly, a detector body/tube with a predeposited getter and various metal parts are obtained. At step 201 the window is glued to the tube/body and cured in dry nitrogen for 16 hours. Once cured, at step 202 a leak check is performed upon the body/window assembly. Separately at step 203 the metal components are placed in a cleaning bath and later vacuum baked at step 204.

At step 205 the detector is assembled according to design drawings. This involves the mounting of the TEC/sensor assembly inside the detector body. A leak check is performed upon the assembled detector (step 206) after which the interior of the detector is pumped through the pinch off tube and simultaneously baked at 120 degrees Celsius (step 207). Optionally the x-ray window may be cooled below 40 degrees Celsius during this step.

Following a cooling step at 208, the detector is bench tested for detector operation at step 209. Assuming this test is passed, the detector is then pumped and outgassed for a period at 210.

At step 211 a heating jacket (in this case) is placed around part of the body/tube to which the getter is attached. Alternatively a high temperature tolerant can may be placed in an oven. If the internal components are intolerant to high temperature (such as in the case of a polymer window) then the window may be cooled during this step to below 40 degrees Celsius. The heat treatment in this case involves elevating the temperature of the getter to 180 degrees Celsius for 24 hours.

At step 212 a final outgassing test is performed and the detector is finally sealed by crimping off the pinch off tube at step 213. A final test of the detector operation is performed at step 213, after which the detector is ready for use.

The present invention provides advantages for x-ray detectors as compared with current non-liquid nitrogen x-ray detectors. Some of these advantages are given below:-
1) The NEG film getter can pump any ingress of water vapour through the ultra thin x-ray windows;
2) Any ice on the x-ray detector can be removed by warming up the detector and pumping the water vapour by the NEG film;
3) Low x-ray energy efficiency is better than Nitrogen or Argon backfilled detectors and, due to the reduced heat load upon the TEC, lower operational temperatures for the sensor can be achieved using less power;
4) The x-ray detector envelope is a hermetically sealed solution and therefore the detector does not contaminate the apparatus with which it is used and vice versa.
5) The vacuum reduces the thermal energy transfer from the x-ray window and stops condensation formation on the x-ray window.
6) The x-ray detector design lends itself to lower costs and easier manufacturing processes. With the invention the getter electrical feedthroughs are not essential because the getter can be activated externally, particularly because of the low temperature activation;
7) The x-ray detector design tends itself to smaller diameter tubes and effective pumping by the NEG film at the x-ray sensor; and
8) There is no outgassing from the metal surfaces underneath the getter film.

## Claims

1. An x-ray detector comprising:-
a housing having one or more internal surfaces defining an internal volume, the housing being adapted in use to contain a vacuum within the internal volume;
an x-ray sensor located within the internal volume of the housing;
a window located within the housing and adapted to permit the passage through the window of x-rays to be detected from the external environment to the sensor; and
a getter material, applied as a coating to the one or more internal surfaces, for absorbing gaseous species present within the vacuum and for substantially preventing outgassing from the parts of the walls coated by the getter material.

2. An x-ray detector according to claim 1, wherein the getter material has an activation temperature of about 200 degrees Celsius or less.

3. An x-ray detector according to any of the preceding claims, wherein the getter material is a non-evaporabte chemical-active getter (NEG) material.

4. Art x-ray detector according to claim 3, wherein the getter is a Ti-Zr alloy.

5. An x-ray detector according to claim 4, wherein the getter is a Ti-Zr-V alloy.

6. An x-ray detector according to any of the preceding claims, further comprising a localised thermal barrier, positioned between at least the getter and the x-ray sensor.

7. An x-ray detector according to any of the preceding claims, wherein the sensor further comprises a thermoelectric cooling (TEC) device.

8. An x-ray detector according to any of the preceding claims, wherein at least part of the housing is arranged as an elongate tube.

9. An x-ray detector according to claim 8, wherein the housing comprises one elongate tube fitted coaxially within another and wherein the volume between the tubes defines the internal volume.

10. An x-ray sensor according to claim 9, wherein the getter material is provided as a layer on the inner surface of the outer tube and/or the outer surface of the inner tube.

11. An x-ray detector according to any of the preceding claims, further comprising a heat pipe for cooling the sensor.

12. An x-ray detector according to any of the preceding claims, wherein the detector is provided as an evacuated and sealed detector can.

13. An x-ray detector according to claim 12, wherein the getter material is provided at least on an inner surface of the housing adjacent the sensor.

14. An x-ray detector according to claim 13, wherein the majority of the housing internal, surfaces bordering the internal volume are provided with the getter material.

15. An x-ray detector according to any of the preceding claims, wherein all components within the housing are capable of being heat-treated at 200 degrees Celsius.

16. A method of forming an x-ray detector according to any of the preceding claims, the method comprising:-
a) positioning the sensor and window within the internal volume of the housing;
b) evacuating the internal volume;
c) heating the getter material to its activation temperature; and
d) sealing the internal volume.

17. A method according to claim 16, wherein the getter material is heated by applying heat to part of the housing in good thermal contact with the getter material.

18. A method according to claim 16 or claim 17, further comprising cooling the sensor during step (c).

19. A method according to claim 18, wherein the sensor is cooled by applying a heat sink to the housing adjacent the sensor.

20. A method according to claim 18 or claim 19, when dependent upon claim 11, wherein the cooling is applied using the heat pipe during step (c).

21. A method according to any of claims 16 to 20, wherein, prior to step (a) the getter material is deposited on one or more inner surfaces of the housing.

22. A method according to claim 21, wherein following deposition, the window is sealed in the housing.

23. A method according to any of claims 16 to 22 wherein step (b) is continued until a predetermined level of outgassing is achieved.

24. A method according to any of claims 16 to 23, wherein step (c) is performed for a period of up to 24 hours.

25. A method according to any of claims 16 to 24, wherein, following step (d) the operational pressure of the detector vacuum is about 1x10⁻³mbar or less.
